# EUROPEAN PATENT SPECIFICATION

(11) **EP 2 106 414 B1**
(45) Date of publication and mention of the grant of the patent: **20.08.2014**
(21) Application number: 07843528.6
(22) Date of filing: 28.09.2007
(51) Int. Cl.: C08G 18/00, C08L 53/02, C08L 23/08, C08L 75/04, C08G 18/42, C08G 18/48, C08K 5/00

(54) **THERMOPLASTIC ELASTOMERS OF STYRENIC BLOCK COPOLYMERS AND ALIPHATIC THERMOPLASTIC POLYURETHANES**
THERMOPLASTISCHE ELASTOMERE AUS STYROL-BLOCKCOPOLYMEREN UND ALIPHATISCHEN THERMOPLASTISCHEN POLYURETHANEN
ÉLASTOMÈRES THERMOPLASTIQUES DE COPOLYMÈRES BLOCS STYRÉNIQUES ET DE POLYURÉTHANES THERMOPLASTIQUES ALIPHATIQUES

(30) Priority: 05.10.2006 US 828362 P
(43) Date of publication of application: 07.10.2009
(73) Proprietor: PolyOne Corporation, Avon Lake, OH 44012 (US)
(72) Inventor: PAGE, Charles, 76135 Karlsruhe (DE)
(74) Representative: Winter, Brandl, Fürniss, Hübner, Röss, Kaiser, Polte - Partnerschaft mbB
(86) International application number: PCT/US2007/079960
(87) International publication number: WO 2008/045702

(56) References cited:
- EP-A1- 1 535 964
- EP-A1- 2 022 512
- WO-A2-02/074863
- JP-A- 2005 187 721
- US-A- 5 149 589
- US-A- 5 436 295
- US-A- 5 472 782
- US-A- 5 910 540
- US-A- 6 106 952
- US-A1- 2005 245 681

## Description

### FIELD OF THE INVENTION

This invention relates to thermoplastic elastomers, polymer compounds which exhibit elasticity while remaining thermoplastic.

### BACKGROUND OF THE INVENTION

The world of polymers has progressed rapidly to transform material science from wood and metals of the 19^{th} Century to the use of thermoset polymers of the mid-20^{th} Century to the use of thermoplastic polymers of the later 20^{th} Century.

Thermoplastic elastomers (TPEs) combine the benefits of elastomeric performance properties of thermoset polymers, such as vulcanized rubber, with the processing properties of thermoplastic polymers.

Different types of polymers can serve different purposes when combined into a single construction. For example, "multiple component" extrusion or molding has recently become popular to provide one type of rheology in one part of the component and a second type of rheology in a second part of the component. A specific use of multiple component thermoplastic compounds is insulating strips for vehicle doors. One part has a relatively rigid rheological structure for securing the component to the door, with the second part being a relative flexible rheological structure to compress and seal the door to the vehicle.

TPEs modified for adhesion to polar substrates, for use in these multi-component molding applications are well established, and methods to improve adhesion and well known in the industry. One such method for improving the adhesion of normally apolar TPEs is disclosed in US Pat. No. 5,472,782. One problem with these common methods is the resulting compound is always opaque, due to the immiscibility and difference in refractive index of the modifiers employed.

Thermoplastic polyurethanes (TPUs) are linear polymers formed by the polymerization reaction of a diisocyanate, a short chain diol as a chain extender, and a long chain diol or polyol. The diisocyanate groups form the hard segment of the TPE and are rigid at room temperature. The molecules are attracted to one another forming crystallites which act as reversible, physical cross-links. The long chain diol and the diisocyanate react to form soft segments that are flexible at room temperature and bring about the rubbery nature of the TPU.

Typical diisocyanates used in the production of TPUs are toluene di-isocyanate (TDI) and diphenyl methane di-isocyanate (MDI), both of these diisocyanates being aromatic and therefore imparting some less desirable properties upon the TPU, such as poor UV and hydrolysis resistance.

Newly introduced aliphatic diisocyanates, while expensive, overcome these problems of aromatic-based diisocyanates, and furthermore have a lower refractive index than such aromatic-based diisocyanates.

Document JP 2005 187721 A relates to the problem of transparency of thermoplastic elastomer compositions. The examples 1-4 of JP 2005 187721 A describe compositions comprising a styrene-isobutylene-styrene block copolymer and an ester-based TPU.

### SUMMARY OF THE INVENTION

What the art needs is a new formulation of thermoplastic elastomer (also called "TPE") that can adhere to various polymeric substrates and exhibit translucent, or preferably transparent, properties, in order to form excellent multiple component extruded or molded parts.

The present invention solves the problem in the art by using aliphatic polycaprolactone TPUs made from aliphatic diisocyanates as a modifying additive for a TPE using a styrenic block copolymer, such as styrene-ethylene-butylene-styrene (SEBS) as the thermoplastic matrix for the compound. The invention benefits from the use of TPUs made from aliphatic diisocyanates ("aliphatic TPU") because the refractive index of the aliphatic TPU is similar to or compatible with the refractive index of the SEBS. This results in a compound that is translucent or approaching ideal transparency, making it possible to have multiple component extruded or molded parts which have the advantage of having one component being translucent or nearly transparent in visible spectrum light. Experiments have determined that aliphatic TPUs with a polycaprolactone soft segment offer superior transparency and adhesion to engineering thermoplastic compounds than aliphatic TPUs with a polyether soft segment.

The second component of the multiple component part can also be translucent or nearly transparent in visible spectrum light. The second component compound is often selected from such engineering thermoplastics as polyamides (PAs), polycarbonates (PCs), acrylonitrile/butylene/styrene (ABS) and blends of PC and ABS. Other compounds suitable for the second component include acrylic resins (including polymethylmethacrylate (PMMA), acrylate-styrene-acrylate (ASA) and methylmethacrylate ABS (MABS)), polyesters and their blends (polybutylene terephthalate, polyethylene terephthalate, and their blends with polycarbonate), and polyoxymethylene, also known as acetal.

In addition to translucency or near transparency, the first component benefiting from the present invention has excellent adhesion to these engineering thermoplastic compounds.

Thus one aspect of the present invention is a multiple component extruded or molded part exhibiting at least translucency, wherein the first component comprises a blend of a styrenic block copolymer and aliphatic polycaprolactone TPU and wherein the second component comprises an engineering thermoplastic selected from the group consisting of polyamides (PAs), polycarbonates (PCs), acrylonitrile/butylene/styrene (ABS) and blends thereof.

Multiple component extruded or molded parts of the present invention are superior to silicone rubber parts in that the soft component can be processed by thermoplastic means without any need for assembly or adhesive.

Features of the invention will become apparent with reference to the following embodiments.

### EMBODIMENTS OF THE INVENTION

### TPE and Compatibilizer

The styrenic block copolymer that has thermoplastic elastomer properties (TPE-S) is selected from styrene-ethylene-butylene-styrene, styrene-ethylene-propylene-styrene, styrene-ethylene-ethylene/propylene-styrene, styrene-isobutylene-styrene, styrene-butadiene-styrene, styrene-isoprene-styrene, and combinations thereof. These examples of TPE-S are not maleated but have weight average molecular weights in excess of 100,000 and preferably in excess of 200,000. Commercially available grades of these TPE-S compounds are Kraton G1651 and Kraton MD 6917 from Kraton Polymers and Septon 8006 from Kuraray.

Any compound that is compatible with the selected TPE-S compounds is eligible to serve as a compatibilizer between the TPE-S and the aliphatic polycaprolactone TPU. Non-limiting examples of compatibilizers include Septon TU-S 5265 TPU-SBC copolymer from Kuraray.

### Aliphatic polycaprolactone TPU

Any aliphatic polycaprolactone thermoplastic polyurethane that is made from one or more aliphatic diisocyanates is eligible for use in the present invention. A non-limiting example of commercially available aliphatic polycaprolactone TPU includes Pearlthane D91T85 aliphatic polycaprolactone TPU available from Merquinsa Mercados Quimicos S.L. of Barcelona, Spain.

### Optional Additives

The compound of the present invention can include conventional plastics additives in an amount that is sufficient to obtain a desired processing or performance property for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.williamandrew.com), can select from many different types of additives for inclusion into the compounds of the present invention.

Non-limiting examples of optional additives include adhesion promoters; biocides (antibacterials, fungicides, and mildewcides), anti-fogging agents; anti-static agents; bonding, blowing and foaming agents; dispersants; fillers and extenders; fire and flame retardants and smoke suppresants; impact modifiers; initiators; lubricants; micas; pigments, colorants and dyes; plasticizers; processing aids; release agents; silanes, titanates and zirconates; slip and anti-blocking agents; stabilizers; stearates; ultraviolet light absorbers; viscosity regulators; waxes; and combinations of them.

Preferably, a paraffinic oil is used as a plasticizer to adjust rheology of the TPE.

Table 1 shows the acceptable, desirable, and preferable ranges of ingredients for the TPE of the present invention.

| **Table 1** | | | |
|---|---|---|---|
| **Ranges of Ingredients** | | | |
| Ingredient (Wt. Percent) | Acceptable | Desirable | Preferable |
| TPE matrix (styrenic block copolymer) | 5 - 65% | 10 - 35% | 18 - 22% |
| Compatibilizer | 0 - 30% | 5 - 20% | 10 - 15% |
| Plasticizer oil | 0 - 35% | 10 - 30% | 15 - 30% |
| Modifier resin (aliphatic TPU) | 10 - 95% | 30 - 60% | 40 - 50% |
| Antioxidant | 0 - 1.0% | 0.05 - 0.5% | 0.05 - 0.15% |
| Hindered Amine Light Stabilizer | 0 - 1.0% | 0.1 - 0.5% | 0.25 - 0.45% |
| UV absorber | 0 - 1.0% | 0.1 - 1.0% | 0.2 - 0.4% |
| Mold Release Agent | 0 - 0.5% | 0.05 - 0.3% | 0.05 - 0.15% |
| Other optional additives | 0 - 10% | 0 - 10% | 0 - 10% |

### Processing

The preparation of compounds of the present invention is uncomplicated. The compound of the present can be made in batch or continuous operations.

Mixing in a continuous process typically occurs in an extruder that is elevated to a temperature that is sufficient to melt the polymer matrix with addition of all additives at the feed-throat, or by injection or side-feeders downstream. Extruder speeds can range from about 50 to about 500 revolutions per minute (rpm), and preferably from about 100 to about 300 rpm. Typically, the output from the extruder is pelletized for later extrusion or molding into polymeric articles.

Mixing in a batch process typically occurs in a Banbury mixer that is also elevated to a temperature that is sufficient to melt the polymer matrix to permit homogenization of the compound components. The mixing speeds range from 60 to 1000 rpm and temperature of mixing can be ambient. Also, the output from the mixer is chopped into smaller sizes for later extrusion or molding into polymeric articles.

Subsequent extrusion or molding techniques are well known to those skilled in the art of thermoplastics polymer engineering. Without undue experimentation but with such references as "Extrusion, The Definitive Processing Guide and Handbook"; "Handbook of Molded Part Shrinkage and Warpage"; "Specialized Molding Techniques"; "Rotational Molding Technology"; and "Handbook of Mold, Tool and Die Repair Welding", all published by Plastics Design Library (www.williamandrew.com), one can make articles of any conceivable shape and appearance using compounds of the present invention.

### USEFULNESS OF THE INVENTION

The TPE-S/Aliphatic TPU blend of the present invention is an excellent one part of a multiple component polymer structure because it has excellent adhesion to engineering thermoplastic compounds identified above.

In addition to door seals for automobiles, multiple component polymer structures are used in the following industrial and consumer products: power tool grips, integrated seals and gaskets, anti-vibration mounts, automotive interior trim, sound deadening parts, glazing gaskets, flexible membranes, and other articles now or hereafter known.

### EXAMPLES

Table 2 shows the commercial sources for the ingredients of Table 1 and also used as ingredients for the Examples. Table 3 shows the formulations of Examples 1 and 2 and of Reference Example 3 and Comparative Example A.

| **Table 2** | | | | |
|---|---|---|---|---|
| **Source of Ingredients** | | | | |
| **Ingredient Name** | **Purpose** | **Generic Name** | **Commercial Source** | **Source Location** |
| Kraton G 1650 | TPE matrix | SEBS | Kraton | France |
| Kraton MD 6917 ES | TPE Matrix | SEBS | Kraton | France |
| TU-S 5265 | Compatibilizer | TPU-SBC copolymer | Kuraray | Japan |
| Primol 382 | Plasticizer | Paraffinic White Oil | ExxonMobil | Europe |
| Pearlthane D91T85 | Modifier resin | Aliphatic, polycaprolactone TPU | Merquinsa | Spain |
| Pearlthane 11T85 | Modifier Resin | Aromatic, polycaprolactone TPU | Merquinsa | Spain |
| Pearlcoat D191K | Modifier Resin | Aliphatic, ether TPU | Merquinsa | Spain |
| Irganox 1010 | Antioxidant | Pentaerythritol Tetrakis CAS:6683-19-8 | Ciba | Europe |
| Chimassorb 944 | HALS | Sterically hindered amine light stabilizer CAS:071878-19-8 | Ciba | Europe |
| Tinuvin P | UV absorber | 2-(2H-benzotriazol-2yl)-p-cresol CAS:2440-22-4 | Ciba | Europe |
| Tinuvin 327 | UV absorber | 2,4-di-tert-butyl-6-(5-chlorobenzotriazol-2-yl) phenol CAS:3864-99-1 | Ciba | Europe |
| Erucamide | Mold Release | Erucamide | Uniquema | Europe |

| **Table 3** | | | | |
|---|---|---|---|---|
| **Recipes and Preparation** | | | | |
| **Ingredient Name** | **Example 1** | **2** | **3 (Ref.)** | **Comp. A** |
| Kraton G 1650 | 20 | **-** | **-** | **-** |
| Kraton MD 6917 | - | 21 | 21 | 21 |
| TU-S 5265 | 15 | 12 | 12 | 12 |
| Primol 382 | 17 | 25 | 25 | 25 |
| Pearlthane D91 T85 | 48 | 42 | - | - |
| Pearlcoat D191K | - | - | 42 | - |
| Pearlthane 11T85 | - | - | - | 42 |
| Irganox 1010 | 0.11 | 0.11 | 0.11 | 0.11 |
| Chimassorb 944 | 0.38 | - | - | - |
| Tinuvin P | 0.3 | - | - | - |
| Tinuvin 327 | - | 0.26 | 0.26 | 0.26 |
| Erucamide | - | 0.1 | 0.1 | 0.1 |
| | | | | |
| Mixing Equipment | W&P ZE25 twin screw compounder | | | |
| Mixing Temp. (°C) Increasing in temperature from throat to die | 180-200 | 180-200 | 180-200 | 200-240 |
| Mixing Speed | 320rpm | | | |
| Order of Addition of Ingredients | All added at Zone 1 except for 10% oil added at the injection port | | | |
| Form of Product After Mixing | Pellets | | | |

The principal difference between the formulations of Examples 1 and 2, Reference Example 3 and Comparative Example A was the use of aliphatic TPUs for Examples 1-3 and aromatic TPU for Comparative Example A.

Pellets of all Examples 1-3 and Comparative Example A were molded into tensile test bars using a Demag injection molding machine, operating at 180-200°C temperature and medium-high pressure.

For the adhesion tests, the following test method was used. Using the Demag injection molding machine with dual barrels, PA or PC or ABS was injected first into a custom designed tool with a moving core, after which the TPE compound was injected directly onto the PA or PC or ABS. The two-component ("2K") test bars were ejected and conditioned at room temperature for 24 hours. After conditioning, an attempt was made by hand to remove the TPE strip from the engineering polymer substrate, and the difficulty noted. Additionally it was noted whether the bond failed by adhesive failure (where the TPE is cleanly removed from the substrate) or by cohesive failure (where a layer of TPE remains on the substrate, the interfacial strength is higher than the cohesive strength of the TPE, the optimal case).

Table 4 shows the experimental results.

| **Table 4** | | | | |
|---|---|---|---|---|
| **Experimental Results** | | | | |
| | **Example 1** | **2** | **3 (Ref.)** | **Comp. A** |
| Shore Durometer (DIN 53 505) | 68 A | 60 | 60 | 60 |
| Density (DIN 53479-A) | 1.008 g/cm³ | 0.985 g/cm³ | 0.957 g/cm³ | 1.008 g/cm³ |
| MFI (190C/5Kg) DIN EN ISO 815 | 220 g/10min | 10.5 g/10min | 15 g/10min | 2 g/10min |
| Tensile Strength (DIN 53504) | 9.5 MPa | 5.6 MPa | 4.4 MPa | 9.0 MPa |
| Elongation at Break (DIN 53504) | 520% | 615% | 475% | 520% |
| Transparency (visual/ subjective) | Good | Good | Translucent | Opaque |
| Adhesion to PA6 | Excellent (cohesive | Excellent (cohesive | Poor (adhesive | Excellent (cohesive |

| (subjective) | failure) | failure) | failure) | failure) |
|---|---|---|---|---|
| Adhesion to PC (subjective) | Excellent (cohesive failure) | Excellent (cohesive failure) | No adhesion | Excellent (cohesive failure) |
| Adhesion to ABS (subjective) | Excellent (cohesive failure) | Excellent (cohesive failure) | No adhesion | Excellent (cohesive failure) |

All of the Examples 1 and 2 and Reference Example 3 yielded at least a translucent compound, whereas Comparative Example A was opaque. Of the Examples, Examples 1 and 2 were superior to Reference Example 3 in both near-transparency and adhesion to all of PA, PC, and ABS, indicating that an aliphatic polycaprolactone TPU works better in the present invention than an aliphatic ether TPU.

The invention is not limited to the above embodiments. The claims follow.

## Claims

1. A thermoplastic elastomer compound, comprising:
(a) styrenic block copolymer selected from the group consisting of styrene-ethylene-butylene-styrene, styrene-ethylene-propylene-styrene, styrene-ethylene-ethylene/propylene-styrene, styrene-isobutylene-styrene, styrene-butadiene-styrene, styrene-isoprene-styrene, and combinations thereof, and
(b) aliphatic polycaprolactone thermoplastic polyurethane.

2. The compound of Claim 1, wherein the styrenic block copolymer has a weight average molecular weight in excess of 100,000.

3. The compound of Claim 1 or Claim 2, wherein the compound further comprises an additive selected from the group consisting of adhesion promoters; biocides; anti-fogging agents; anti-static agents; blowing agents; bonding agents; foaming agents; dispersants; fillers; extenders; fire retardants; flame retardants; smoke suppresants; impact modifiers; initiators; lubricants; micas; pigments; colorants; dyes; plasticizers; processing aids; release agents; silanes, titanates; zirconates; slip agents; anti-blocking agents; stabilizers; stearates; ultraviolet light absorbers; viscosity regulators; waxes; and combinations of them.

4. The compound of Claim 3, wherein the plasticizer is a paraffinic oil.

5. The compound of any of the above Claims, wherein the amount of styrenic block copolymer ranges from 5 to 65 weight percent of the compound, and wherein the amount of aliphatic thermoplastic polyurethane ranges from 10 to 95 weight percent of the compound.

6. The compound of any of the above Claims, wherein the amount of styrenic block copolymer ranges from 10 to 35 weight percent of the compound, and wherein the amount of aliphatic thermoplastic polyurethane ranges from 30 to 60 weight percent of the compound.

7. The compound of any of the above Claims, wherein the amount of styrenic block copolymer ranges from 18 to 22 weight percent of the compound, and wherein the amount of aliphatic thermoplastic polyurethane ranges from 40 to 50 weight percent of the compound.

8. A multiple component article, comprising the compound of any of Claims 1-7 as the first component and an engineering thermoplastic compound as a second component.

9. The article of Claim 8, wherein the article is molded and the second component is selected from the group consisting of polyamides, polycarbonates, acrylonitrile/butylene/styrene, acrylics, polyesters and their blends, and polyoxymethylene, and blends thereof.

10. The article of Claim 8, wherein the article is extruded and the second component is selected from the group consisting of polyamides, polycarbonates, acrylonitrile/butylene/styrene, acrylics, polyesters and their blends, and polyoxymethylene, and blends thereof.

11. The article of any of Claims 8-10, wherein the article is formed to be a vehicle door seal.

12. The article of any of the Claims of 8-10, wherein the article is formed to be a part selected from the group consisting of a power tool grip, an integrated seal, an integrated gasket, an anti-vibration mount, a piece of automotive interior trim, a sound deadening part, a glazing gasket, and a flexible membrane.

13. The article of any of Claims 8-12, wherein the first component adheres to the second component and wherein failure of adhesion upon application of separation force causes cohesive failure wherein a layer of the first component remains on the second component after application of separation force.

## Patentansprüche

1. Thermoplastisches Elastomer-Compound, umfassend:
(a) Styrol-Blockcopolymer, ausgewählt aus der Gruppe bestehend aus Styrol-Ethylen-Butylen-Styrol, Styrol-Ethylen-Propylen-Styrol, Styrol-Ethylen-Ethylen/Propylen-Styrol, Styrol-Isobutylen-Styrol, Styrol-Butadien-Styrol, Styrol-Isopren-Styrol und Kombinationen davon, und
(b) aliphatisches thermoplastisches Polycaprolacton-Polyurethan.

2. Compound nach Anspruch 1, wobei das Styrol-Blockcopolymer eine gewichtsmittlere Molmasse von über 100.000 hat.

3. Compound nach Anspruch 1 oder Anspruch 2, wobei das Compound weiterhin einen Zuschlagsstoff umfasst, der ausgewählt ist aus der Gruppe bestehend aus Haftvermittlern; Bioziden; Antibeschlagmitteln; Antistatika; Treibmitteln; Bindemitteln; Schäummitteln; Dispergiermitteln; Füllstoffen; Streckmitteln; Feuerschutzmitteln; Flammschutzmitteln; rauchunterdrückenden Mitteln; Schlagzähmodifikatoren; Initiatoren; Schmiermitteln; Glimmer; Pigmenten; Farbmitteln; Farbstoffen; Weichmachern; Verarbeitungshilfen; Trennmitteln; Silanen, Titanaten; Zirkonaten; Gleitmitteln; Antiblockmitteln; Stabilisatoren; Stearaten; UV-Absorbern; Viskositätsregulatoren; Wachsen; und Kombinationen davon.

4. Compound nach Anspruch 3, wobei der Weichmacher ein Paraffinöl ist.

5. Compound nach einem der vorhergehenden Ansprüche, wobei die Menge an Styrol-Blockcopolymer 5 bis 65 Gewichtsprozent des Compounds ausmacht, und wobei die Menge an aliphatischem thermoplastischen Polyurethan 10 bis 95 Gewichtsprozent des Compounds ausmacht.

6. Compound nach einem der vorhergehenden Ansprüche, wobei die Menge an Styrol-Blockcopolymer 10 bis 35 Gewichtsprozent des Compounds ausmacht, und wobei die Menge an aliphatischem thermoplastischen Polyurethan 30 bis 60 Gewichtsprozent des Compounds ausmacht.

7. Compound nach einem der vorhergehenden Ansprüche, wobei die Menge an Styrol-Blockcopolymer 18 bis 22 Gewichtsprozent des Compounds ausmacht, und wobei die Menge an aliphatischem thermoplastischen Polyurethan 40 bis 50 Gewichtsprozent des Compounds ausmacht.

8. Mehrkomponentenartikel, umfassend das Compound nach einem der Ansprüche 1-7 als erste Komponente und ein technisches thermoplastisches Compound als eine zweite Komponente.

9. Artikel nach Anspruch 8, wobei der Artikel geformt ist und die zweite Komponente ausgewählt ist aus der Gruppe bestehend aus Polyamiden, Polycarbonaten, Acrylnitril/Butylen/Styrol, Acrylharzderivaten, Polyestern und ihren Mischungen und Polyoxymethylen, und Mischungen davon.

10. Artikel nach Anspruch 8, wobei der Artikel extrudiert ist und die zweite Komponente ausgewählt ist aus der Gruppe bestehend aus Polyamiden, Polycarbonaten, Acrylnitril/Butylen/Styrol, Acrylharzderivaten, Polyestern und ihren Mischungen und Polyoxymethylen, und Mischungen davon.

11. Artikel nach einem der Ansprüche 8-10, wobei der Artikel als Fahrzeugtürdichtung ausgebildet ist.

12. Artikel nach einem der Ansprüche 8-10, wobei der Artikel als ein Teil ausgebildet ist, das ausgewählt ist aus der Gruppe bestehend aus einem Elektrowerkzeuggriff, einer integrierten Dichtung, einem integrierten Dichtungsring, einem Hydrolager, einem Stück einer Autoinnenverkleidung, einem schalldämpfenden Teil, einer Verglasungsdichtung und einer flexiblen Membran.

13. Artikel nach einem der Ansprüche 8-12, wobei die erste Komponente an der zweiten Komponente haftet und wobei ein Adhäsionsbruch bei Anlegen einer Trennkraft zu einem Kohäsionsbruch führt, wobei nach Anlegen der Trennkraft eine Schicht der ersten Komponente an der zweiten Komponente verbleibt.

## Revendications

1. Composé élastomère thermoplastique, comprenant :
(a) un copolymère styrénique séquencé choisi dans le groupe constitué du styrène-éthylène-butylène-styrène, du styrène-éthylène-propylène-styrène, du styrène-éthylène-éthylène/propylène-styrène, du styrène-isobutylène-styrène, du styrène-butadiène-styrène, du styrène-isoprène-styrène et des combinaisons de ceux-ci, et
(b) un polyuréthane thermoplastique de polycaprolactone aliphatique.

2. Composé selon la revendication 1, dans lequel le copolymère styrénique séquencé a une masse moléculaire moyenne en poids supérieure à 100 000.

3. Composé selon la revendication 1 ou la revendication 2, dans lequel le composé comprend en outre un additif choisi dans le groupe constitué des promoteurs d'adhérence ; des biocides ; des agents antivoile ; des agents antistatiques ; des agents d'expansion ; des agents de liaison ; des agents moussants ; des dispersants ; des charges ; des diluants ; des retardateurs d'inflammation ; des retardateurs de flamme ; des agents supprimant la fumée ; des agents modifiant la résistance aux chocs ; des initiateurs ; des lubrifiants ; des micas ; des pigments ; des colorants ; des matières colorantes ; des plastifiants ; des auxiliaires de traitement ; des agents de démoulage ; des silanes, des titanates ; des zirconates ; des agents de glissement ; des agents antiblocage ; des stabilisants ; des stéarates ; des absorbeurs de lumière ultraviolette ; des régulateurs de viscosité ; des cires ; et des combinaisons de ceux-ci.

4. Composé selon la revendication 3, dans lequel le plastifiant est une huile paraffinique.

5. Composé selon l'une quelconque des revendications précédentes, dans lequel la quantité de copolymère styrénique séquencé s'échelonne de 5 à 65 pour cent en poids du composé et dans lequel la quantité de polyuréthane thermoplastique aliphatique s'échelonne de 10 à 95 pour cent en poids du composé.

6. Composé selon l'une quelconque des revendications précédentes, dans lequel la quantité de copolymère styrénique séquencé s'échelonne de 10 à 35 pour cent en poids du composé et dans lequel la quantité de polyuréthane thermoplastique aliphatique s'échelonne de 30 à 60 pour cent en poids du composé.

7. Composé selon l'une quelconque des revendications précédentes, dans lequel la quantité de copolymère styrénique séquencé s'échelonne de 18 à 22 pour cent en poids du composé et dans lequel la quantité de polyuréthane thermoplastique aliphatique s'échelonne de 40 à 50 pour cent en poids du composé.

8. Article à plusieurs composants, comprenant le composé selon l'une quelconque des revendications 1 à 7 en tant que premier composant et un composé thermoplastique industriel en tant que second composant.

9. Article selon la revendication 8, dans lequel l'article est moulé et le second composant est choisi dans le groupe constitué des polyamides, des polycarbonates, de l'acrylonitrile/butylène/styrène, des composés acryliques, des polyesters et de leurs mélanges, et du polyoxyméthylène, et des mélanges de ceux-ci.

10. Article selon la revendication 8, dans lequel l'article est extrudé et le second composant est choisi dans le groupe constitué des polyamides, des polycarbonates, de l'acrylonitrile/butylène/styrène, des composés acryliques, des polyesters et de leurs mélanges, et du polyoxyméthylène, et des mélanges de ceux-ci.

11. Article selon l'une quelconque des revendications 8 à 10, dans lequel l'article est transformé pour devenir un joint de porte de véhicule.

12. Article selon l'une quelconque des revendications 8 à 10, dans lequel l'article est transformé pour devenir une pièce choisie dans le groupe constitué d'une poignée d'outil mécanique, d'une étanchéité intégrée, d'un joint intégré, d'un montage antivibrations, d'une pièce de garniture d'intérieur d'automobile, d'une pièce d'amortissement du bruit, d'un joint de vitrage et d'une membrane flexible.

13. Article selon l'une quelconque des revendications 8 à 12, dans lequel le premier composant adhère au second composant et dans lequel un défaut d'adhérence suite à l'application d'une force de séparation provoque un défaut de cohésion, où une couche du premier composant reste sur le second composant après l'application de la force de séparation.
